# FASCICULE DE BREVET EUROPEEN

(11) **EP 0 691 237 B1**
(45) Date de publication et mention de la délivrance du brevet: **26.03.1997**
(21) Numéro de dépôt: 95401614.3
(22) Date de dépôt: 05.07.1995
(51) Int. Cl.: B60N 2/12

(54) **Glissière pour siège de véhicule**
Fahrzeugsitzgleitschiene
Vehicle seat slide

(30) Priorité: 08.07.1994 FR 9408490
(43) Date de publication de la demande: 10.01.1996
(73) Titulaire: BERTRAND FAURE EQUIPEMENTS S.A., F-92100 Boulogne (FR)
(72) Inventeur: Droulon, Georges Henri, F-61000 St-Georges des Groseillers (FR); Moradell, Pierre Gabriel Raymond, F-27450 St. Gregoire du Vievre (FR)
(74) Mandataire: Burbaud, Eric

(56) Documents cités:
- EP-A- 0 537 057
- FR-A- 2 430 330
- GB-A- 261 460
- US-A- 1 684 944

## Description

La présente invention est relative aux glissières pour sièges de véhicules, et aux sièges de véhicules équipés de telles glissières.

Plus particulièrement, l'invention est destinée aux sièges de véhicules qui comportent une assise généralement montée sur deux glissières, en vue de déplacer cette assise en translation vers l'avant et vers l'arrière selon une direction dite longitudinale, et dans lesquels l'assise doit pouvoir être déplacée rapidement vers l'avant puis retrouver facilement sa position précédemment réglée.

L'invention concerne notamment les sièges avant de véhicules automobiles à deux portes, qui doivent être avancés en même temps que le dossier est rabattu vers l'avant, afin de libérer l'accès aux places arrière.

Le document US-A-1 684 944 divulgue une glissière à mémoire pour siège de véhicule, comportant:
- un premier profilé dit fixe, destiné à être solidarisé avec le véhicule,
- un deuxième profilé dit mobile, destiné à supporter une assise de siège, ce profilé mobile étant disposé parallèlement au profilé fixe et monté coulissant le long dudit profilé fixe,
- des premiers moyens de verrouillage pour immobiliser le profilé mobile par rapport au profilé fixe, ces premiers moyens de verrouillage pouvant être placés soit dans un état verrouillé où le profilé mobile est immobilisé par rapport au profilé fixe, soit dans un état déverrouillé où le profilé mobile peut coulisser le long du profilé fixe,
- un patin de mémorisation déplaçable en translation le long du profilé fixe et limitant le mouvement du profilé mobile dans un sens le long du profilé fixe, en définissant ainsi une position mémorisée du profilé mobile, le patin de mémorisation comportant un tronçon de profilé de même section que le profilé mobile, lequel tronçon est monté coulissant le long du profilé fixe de la même façon que ledit profilé mobile,
- des deuxièmes moyens de verrouillage pour immobiliser le patin de mémorisation par rapport au profilé fixe, ces deuxièmes moyens de verrouillage pouvant être placés soit dans un état verrouillé où le patin de mémorisation est immobilisé par rapport au profilé fixe, soit dans un état déverrouillé où le patin de mémorisation peut coulisser le long du profilé fixe,
- des moyens d'accouplement pour accoupler le profilé mobile au patin de mémorisation, ces moyens d'accouplement étant dans un état accouplé au moins lorsque les premiers et deuxièmes moyens de verrouillage sont tous les deux dans leur état déverrouillé, le profilé mobile et le patin de mémorisation étant alors solidaires l'un de l'autre, et lesdits moyens d'accouplement étant dans un état désaccouplé au moins lorsque les premiers moyens de verrouillage sont dans leur état déverrouillé tandis que les deuxièmes moyens de verrouillage sont dans leur état verrouillé, le profilé mobile et le patin de mémorisation n'étant alors plus solidaires l'un de l'autre,
- des premiers moyens de commande pour placer simultanément les premiers et deuxièmes moyens de verrouillage dans leur état déverrouillé,
- et des deuxièmes moyens de commande pour placer seulement les premiers moyens de verrouillage dans leur état déverrouillé, les deuxièmes moyens de verrouillage restant alors dans leur état verrouillé.

Le siège divulgué dans le document susmentionné ne comporte pas de ceinture de sécurité.

Toutefois, on connaît par ailleurs des sièges de véhicule qui comportent des ceintures de sécurités dont au moins un des trois points de fixation est relié au siège.

Habituellement, ce point de fixation est relié à la structure de l'assise du siège, de sorte que lorsque le véhicule subit un choc qui engendre un effort important sur les points de fixation de la ceinture, notamment en cas d'accident du véhicule, cet effort peut éventuellement provoquer une déformation du profilé fixe et du profilé mobile supportant l'assise du siège.

Le siège risque alors de ne plus pouvoir coulisser vers l'avant, ce qui peut avoir des conséquences très graves lorsque le siège en question est un siège avant de véhicule à deux portes : en effet, dans ce cas, d'une part les passagers des places arrière risquent d'être considérablement gênés pour sortir rapidement du véhicule après l'accident, et d'autre part, les secours peuvent également être gênés pour accéder aux places arrière si les passagers des places arrière sont bléssés.

La présente invention a notamment pour but de proposer une glissière de siège du type défini ci-dessus qui permette de remédier à ces inconvénients.

A cet effet, selon l'invention, une glissière à mémoire pour siège de véhicule du genre en question est caractérisée en ce que le patin de mémorisation comporte en outre un organe de fixation pour une ceinture de sécurité.

Ainsi, même lorsque le véhicule subit un choc important, si l'effort de traction repris par la ceinture de sécurité engendre une déformation du patin de mémorisation ou du profilé fixe au niveau du patin de mémorisation, le profilé mobile de la glissière reste toutefois non déformé, et le profilé fixe est en général également non déformé au niveau du profilé mobile. Par conséquent, le siège peut toujours être déplacé vers l'avant, en permettant aux passagers arrière de sortir du véhicule.

Dans des modes de réalisation préférés, on a recours en outre à l'une et/ou à l'autre des dispositions suivantes:
- le profilé fixe comporte une denture, les premiers moyens de verrouillage comportant un premier verrou qui est monté sur le profilé mobile et qui coopère avec la denture pour immobiliser le profilé mobile, et les deuxièmes moyens de verrouillage comportant un deuxième verrou qui est monté sur le patin de mémorisation et qui coopère avec ladite denture pour immobiliser le patin de mémorisation: on met ainsi à profit la denture prévue sur le profilé fixe pour immobiliser le profilé mobile, afin d'immobiliser également le patin de mémorisation;
- les premiers moyens de verrouillage comportent un premier verrou qui est monté sur le profilé mobile et qui coopère avec le profilé fixe pour immobiliser ledit profilé mobile, ce premier verrou étant déplaçable entre une position verrouillée et une position déverrouillée correspondant respectivement aux états verrouillés et déverrouillés des premiers moyens de verrouillage, et ledit premier verrou étant sollicité par un premier ressort vers sa position verrouillée, les deuxièmes moyens de verrouillage comportant un deuxième verrou qui est monté sur le patin de mémorisation et qui coopère avec le profilé fixe pour immobiliser ledit patin de mémorisation, ce deuxième verrou étant déplaçable entre des positions verrouillée et déverrouillée correspondant respectivement aux états verrouillé et déverrouillé des deuxièmes moyens de verrouillage, et ledit deuxième verrou étant sollicité par un deuxième ressort vers sa position verrouillée, un cliquet étant monté sur le profilé mobile, ce cliquet étant déplaçable entre d'une part une position d'engagement où il bloque le premier verrou dans sa position déverrouillée, et d'autre part une position effacée où il n'interfère pas avec le premier verrou, ledit cliquet étant sollicité vers sa position d'engagement par un troisième ressort, et un organe de butée étant solidaire du patin de mémorisation, cet organe de butée étant prévu pour déplacer et maintenir le cliquet dans sa position effacée lorsque le profilé mobile est dans sa position mémorisée: le cliquet permet donc de maintenir le premier verrou dans sa position déverrouillée dès que les premiers moyens de commande ont été actionnés et que l'assise du siège a été légèrement avancée, et ce jusqu'à ce que l'assise du siège ait retrouvé sa position mémorisée:
- les premiers moyens de commande comportent un arbre de commande qui s'étend longitudinalement parallèlement au profilé fixe et au profilé mobile et qui est monté rotatif entre une position de repos et une position d'actionnement, l'arbre de commande étant sollicité vers sa position de repos par un quatrième ressort, le premier verrou étant monté rotatif à mouvement perdu autour de l'arbre de commande, des premiers et deuxièmes jeux angulaires étant prévus respectivement dans deux sens angulaires opposés entre l'arbre de commande et le premier verrou lorsque l'arbre de commande est dans sa position de repos et le premier verrou est dans sa position verrouillée, le premier jeu angulaire permettant au premier verrou de se déplacer de sa position verrouillée jusqu'à sa position déverrouillée sous l'action des deuxièmes moyens de commande sans entraîner de rotation de l'arbre de commande, le deuxième jeu angulaire étant prévu pour que la rotation de l'arbre de commande de sa position de repos jusqu'à sa position d'actionnement s'effectue d'abord sans rotation du premier verrou jusqu'au rattrapage dudit deuxième jeu angulaire, après quoi l'arbre de commande entraîne le premier verrou jusqu'à sa position déverrouillée, le deuxième verrou étant monté rotatif autour d'un axe disposé dans le prolongement de l'arbre de commande, l'arbre de commande comportant une extrémité d'accouplement venant en engagement avec une partie réceptrice solidaire du deuxième verrou lorsque le profilé mobile est dans sa position mémorisée, l'arbre de commande entraînant alors le deuxième verrou en rotation de sa position verrouillée à sa position déverrouillée avec un troisième jeu angulaire lorsque ledit arbre de commande est déplacé de sa position de repos à sa position d'actionnement, un couplage à baïonnette étant prévu entre l'extrémité d'actionnement de l'arbre de commande et la partie réceptrice pour solidariser le profilé mobile avec le patin de mémorisation après rattrapage du troisième jeu, ladite extrémité d'accouplement et ladite partie réceptrice constituant ainsi les moyens d'accouplement susmentionnés;
- les deuxièmes moyens de commande comportent un levier qui est solidaire du deuxième verrou;
- les premiers moyens de verrouillage comportent un premier verrou qui est monté sur le profilé mobile et qui est sollicité vers une position de repos par un premier ressort, les deuxièmes moyens de verrouillage étant constitués par un deuxième verrou qui est monté sur le patin de mémorisation et qui est déplaçable entre une position verrouillée où il coopère avec le profilé fixe pour immobiliser le patin de mémorisation et une position déverrouillée où il permet le coulissement du patin de mémorisation, ce deuxième verrou étant sollicité vers sa position verrouillée par un deuxième ressort, le premier verrou étant en prise avec le deuxième verrou lorsque ledit premier verrou est dans sa position de repos et ledit deuxième verrou est dans sa position verrouillée tandis que le profilé mobile est dans sa position mémorisée, pour solidariser le profilé mobile avec le patin de mémorisation lui-même immobilisé par rapport au profilé fixe, les premier et deuxième moyens de verrouillage étant ainsi dans leur état verrouillé, le premier verrou étant déplaçable dans une première direction sous l'action des premiers moyens de commande, le premier verrou restant alors en prise avec le deuxième verrou et agissant sur ledit deuxième verrou pour le déplacer dans sa position déverrouillée, les premier et deuxième moyens de verrouillage étant alors dans leur état déverrouillé et le premier verrou constituant les moyens d'accouplement entre le profilé mobile et le patin de mémorisation, et le premier verrou étant également déplaçable dans une deuxième direction opposée à la première direction, sous l'action des deuxièmes moyens de commande, en se dégageant du deuxième verrou, les premiers moyens de verrouillage étant ainsi dans leur état déverrouillé tandis que les deuxièmes moyens de verrouillage restent dans leur état verrouillé: dans cette forme de réalisation, le nombre de pièces constituant la glissière à mémoire est particulièrement réduit;
- les premiers et deuxièmes verrous comportent respectivement des parties qui coopèrent par action de came pour déplacer le premier verrou dans la deuxième direction susmentionnée lorsque le profilé mobile est ramené vers sa position mémorisée après en avoir été éloigné, le premier verrou étant ensuite ramené dans sa position de repos lorsque le profilé mobile est revenu dans sa position mémorisée, ce qui verrouille le profilé mobile, le deuxième ressort ayant une force suffisante pour maintenir le deuxième verrou dans sa position verrouillée au cours de ce mouvement.

L'invention a également pour objet un siège de véhicule comportant une assise montée coulissante longitudinalement au moyen d'au moins une glissière à mémoire telle que définie ci-dessus, l'assise du siège étant fixée au profilé mobile de la glissière, ce siège comportant une ceinture de sécurité dont un point d'attache est constitué par l'organe de fixation appartenant au patin de mémorisation.

Avantageusement, l'organe de fixation appartenant au patin de mémorisation est le seul point de fixation de la ceinture qui est fixé au siège.

D'autres caractéristiques et avantages de l'invention apparaîtront au cours de la description détaillée suivante de deux de ses formes de réalisation, données à titre d'exemples non limitatifs, en regard des dessins joints.

Sur les dessins:
- la figure 1 est une vue schématique représentant un siège qui peut être équipé d'au moins une glissière à mémoire selon l'invention,
- la figure 2 est une vue en perspective représentant une glissière à mémoire selon une première forme de réalisation de l'invention,
- le figure 3 est une vue de détail représentant la position de plusieurs organes essentiels de la glissière de la figure 2 dans sa position normale d'utilisation,
- la figure 4 est une vue similaire à la figure 3, pendant le réglage de la position longitudinale du siège,
- la figure 5 est une vue similaire aux figures 3 et 4, lorsque le profilé mobile est déplacé vers l'avant, sans déplacement du patin de mémorisation, lors de l'accès aux places arrière,
- la figure 6 est une vue en perspective d'une glissière selon une autre forme de réalisation de l'invention, et
- la figure 7 est une vue de détail de la figure 6.

Sur les différentes figures, les mêmes références désignent des éléments identiques ou similaires.

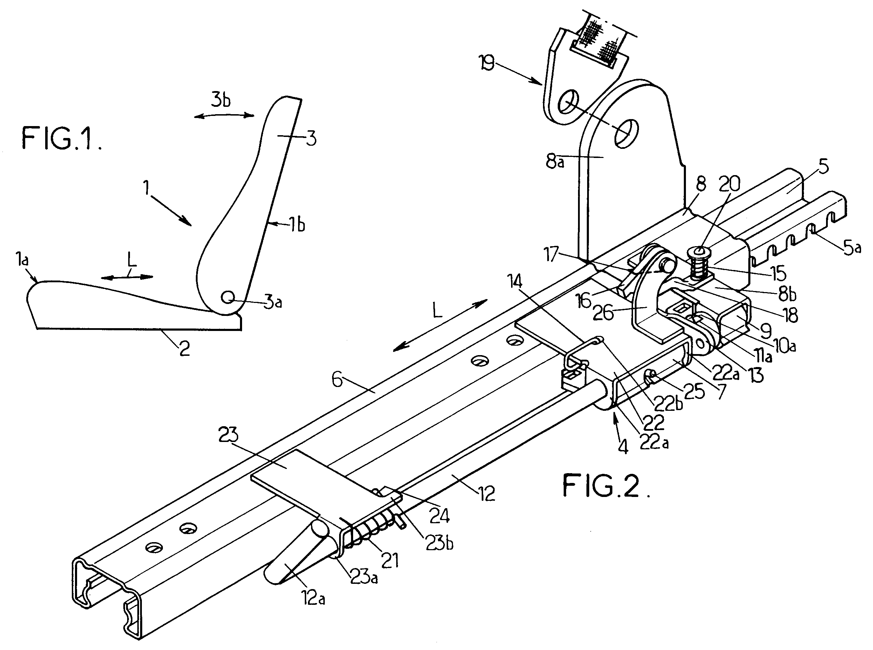

Comme représenté schématiquement sur la figure 1, l'invention s'applique à un siège de véhicule 1, notamment un siège avant de véhicule automobile à deux portes, c'est-à-dire un véhicule dans lequel il est nécessaire de déplacer au moins un des sièges avant pour accéder au siège arrière.

Le siège 1 comporte une assise 2 qui définit une partie avant 1a du siège et un dossier 3 qui définit une partie arrière 1b du siège. L'assise 2 est déplaçable en translation par rapport au plancher du véhicule, dans une direction longitudinale L, vers l'avant et vers l'arrière du siège.

Le siège comporte également un dossier 3 qui est monté sur l'assise 2 de façon à pouvoir pivoter autour d'un axe 3a, comme représenté par la double flèche 3b sur la figure 1, entre une position rabattue vers l'avant et une position relevée qui constitue la position d'utilisation normale du siège.

Pour accéder aux places arrière du véhicule, on déplace l'assise 2 vers l'avant au maximum dans la direction longitudinale L, et on bascule le dossier 3 également vers l'avant.

L'assise 2 du siège est généralement montée sur le plancher du véhicule par l'intermédiaire de deux glissières orientées dans la direction L, au moins une de ces deux glissières pouvant être une glissière à mémoire 4 qui permet de retrouver automatiquement la position qu'occupait le siège avant d'être déplacé vers l'avant pour dégager l'accès aux places arrières du véhicule.

Dans tous les cas, une telle glissière à mémoire comporte un premier profilé 5 dit fixe, qui est fixé au plancher du véhicule, et un deuxième profilé 6 dit mobile, qui supporte l'assise 2 du siège et qui est disposé parallèlement au profilé fixe en pouvant coulisser le long dudit profilé fixe dans la direction longitudinale L.

Le profilé mobile 6 peut être immobilisé par rapport au profilé fixe 5 par un premier verrou, respectivement 7, 100, qui sera décrit ci-après en regard des différentes formes de réalisation.

La glissière à mémoire comporte un patin de mémorisation 8 qui inclut un tronçon de profilé de même section que le profilé mobile 6, ce tronçon de profilé étant monté coulissant le long du profilé fixe 5 de la même façon que le profilé mobile 6.

Ce patin de mémorisation 8 comporte une patte de fixation 8a pour fixer un point d'attache 19 de ceinture de sécurité.

De préférence, parmi les trois points d'attache de la ceinture de sécurité les deux points d'attache haut et bas situés du même côté du siège sont fixés à la caisse du véhicule, et le troisième point d'attache, qui est disposé vers le milieu du véhicule et qui comporte la fermeture de la ceinture de sécurité, est fixé à la patte de fixation 8a.

Le patin de mémorisation 8 comporte un verrou, dit deuxième verrou, respectivement 9, 101, qui coopère avec le profilé fixe 5 pour immobiliser le patin de mémorisation par rapport au profilé fixe et qui est déplaçable entre une position verrouillée où le patin de mémorisation est immobilisé par rapport au profilé fixe, et une position déverrouillée où le patin de mémorisation peut coulisser le long du profilé fixe.

Dans les exemples représentés sur les dessins, le profilé fixe 5 comporte sur un côté un rebord longitudinal dirigé vers le bas qui présente une denture 5a, et le deuxième verrou, respectivement 9,101 comporte une plaquette qui est montée pivotante sur un support 8b solidaire du patin de mémorisation 8, autour d'un axe 9a, 101b qui est parallèle à la direction L.

La plaquette du deuxième verrou 9, 101 présente un ou plusieurs orifices 9b, 101c aptes à venir en engagement avec la denture 5a, et elle pénètre dans un évidement ménagé dans un côté du patin de mémorisation 8 de façon que les orifices 9b, 101c se trouvent sous la denture 5a.

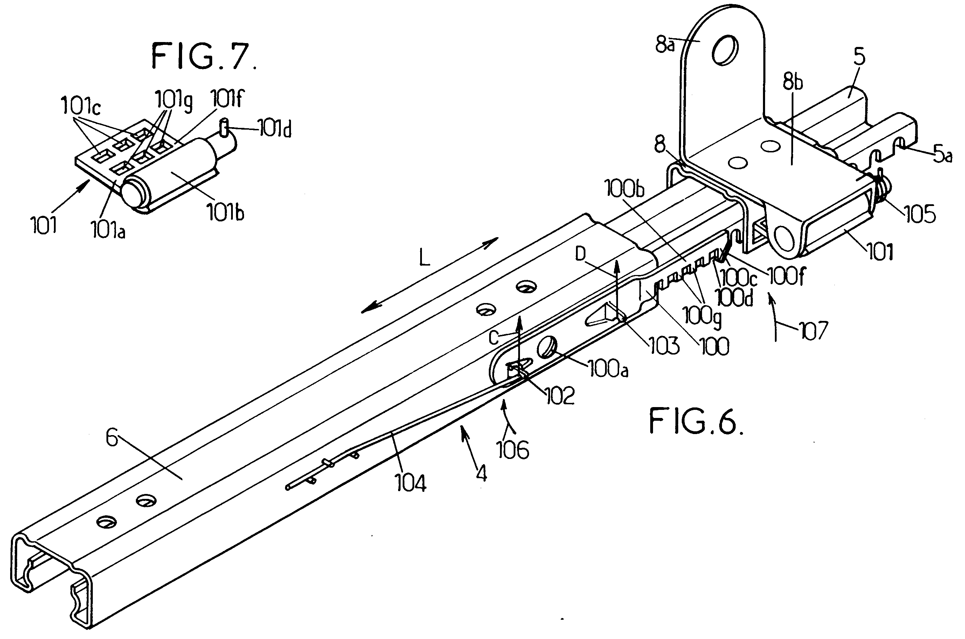

Le deuxième verrou est sollicité en rotation vers sa position verrouillée par un ressort, respectivement 15, 105. Sur les figures 2 à 5, il s'agit d'un ressort hélicoïdal de compression 5 monté entre le support 8b et une tête élargie située à une extrémité d'une tige 20 qui traverse le support 8b et dont l'autre extrémité traverse une lumière 9c ménagée dans la plaquette du deuxième verrou 9, ladite autre extrémité comportant également une tête élargie disposée sous le verrou 9. Sur les figures 6, 7, le ressort 105 est un ressort de torsion monté entre le support 8b et une goupille 101d à une extrémité de l'axe 101b du deuxième verrou 101.

Dans une première forme de réalisation, représentée sur les figures 2 à 5, le premier verrou 7 coopère avec la denture 5a du profilé fixe.

Le premier verrou 7 est monté rotatif sur un côté du profilé mobile 6 autour d'un axe parallèle à la direction L, entre une position verrouillée où le premier verrou 7 coopère avec la denture 5a pour immobiliser le profilé mobile 6 par rapport au profilé fixe, et une position déverrouillée où le profilé mobile 6 peut coulisser par rapport au profilé fixe.

Le premier verrou 7 comporte une plaquette 7a sensiblement plane qui présente une rangée d'orifices 7b aptes à venir en engagement avec la denture 5a, la plaquette 7a pénétrant à l'intérieur du profilé mobile 6 par un évidement ménagé sur un côté de ce profilé mobile, de façon que les orifices 7b se trouvent sous la denture 5a.

La plaque 7a du premier verrou est solidaire d'un levier 13 lui-même constitué d'une plaque sensiblement plane perpendiculaire à la plaquette 7a, ce levier permettant de déplacer le deuxième verrou 7 vers sa position déverrouillée.

Le levier 13 peut être actionné par exemple au moyen d'un câble (non représenté) dont une extrémité est fixée audit levier par un trou 13a ménagé dans ce levier.

Enfin, la plaquette 7a est également solidaire d'une douille cylindrique 7c qui s'étend axialement parallèlement à la direction L, et qui est montée rotative à mouvement perdu autour d'un arbre de commande 12 qui la traverse.

L'arbre de commande 12 s'étend parallèlement à la direction L entre une première extrémité 10, dite extrémité d'accouplement et une deuxième extrémité dotée d'un levier de commande 12a ou de tout autre moyen permettant de faire tourner l'arbre de commande 12 autour de son axe.

L'arbre de commande 12 tourillonne sur deux flasques 22a d'un support 22 qui est fixé au profilé mobile 6, ces deux flasques 22a étant disposés de part et d'autre de la douille 7c.

D'autre part, l'arbre de commande 12 tourillonne également sur un flasque 23a d'un autre support 23 également fixé au profilé mobile 6.

Un ressort de torsion 21, monté entre le support 23 et une goupille 24 de l'arbre de commande 12, sollicite ledit arbre de commande 12 vers une position de repos qui est définie par la butée de la goupille 24 contre une partie 23b du support 23. A partir de cette position de repos, l'arbre de commande 12 peut être déplacé en rotation jusqu'à une position d'actionnement, où il entraîne les premier et deuxième verrous 7, 9 dans leur position déverrouillée, comme il sera vu ci-après.

Le premier verrou 7 est sollicité en rotation autour de l'arbre de commande 12 vers sa position verrouillée, par une ressort de flexion 14 sensiblement en forme de U, dont une branche est disposée au-dessus du support 22 et pénètre dans un orifice 22b de ce support, et dont l'autre branche pénètre dans un orifice 13b de la plaque constituant le levier 13.

L'arbre de commande 12 entraîne en rotation le premier verrou 7 au moyen d 'une goupille 25 solidaire dudit arbre de commande, qui traverse une lumière 7d de direction circonférentielle ménagée dans la douille cylindrique 7c du premier verrou.

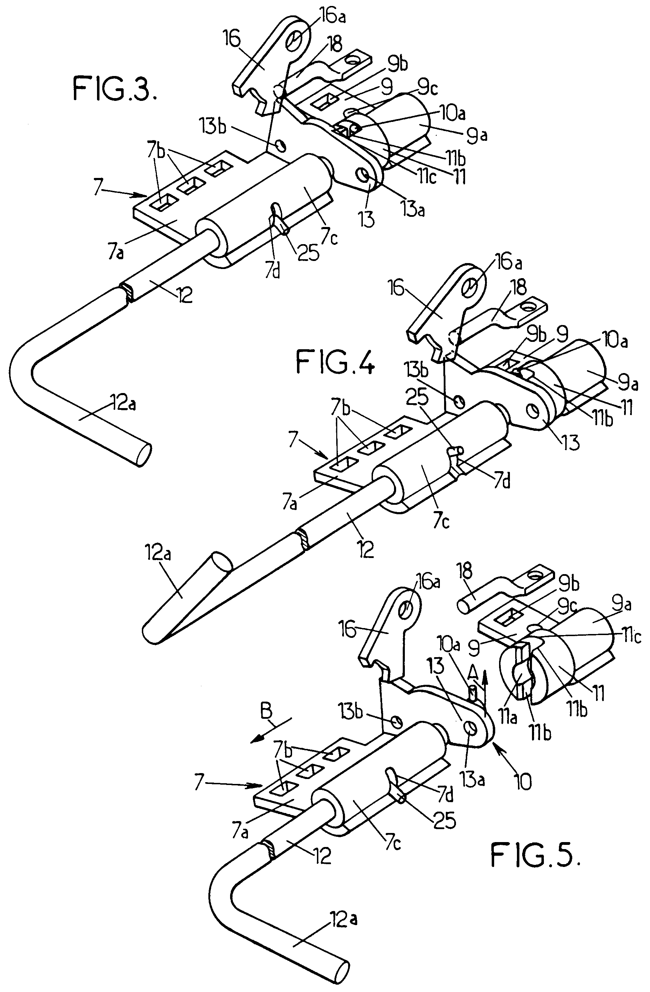

Lorsque l'arbre de commande 12 est dans sa position de repos et le premier verrou 7 dans sa position verrouillée, comme représenté sur les figures 2 et 3, la lumière 7d ménage deux jeux angulaires dans deux sens de rotation opposés entre l'arbre de commande et le premier verrou:
- un premier jeu angulaire permettant au premier verrou de se déplacer de sa position verrouillée jusqu'à sa position déverrouillée sans entraîner en rotation l'arbre de commande 12,
- et un deuxième jeu angulaire prévu pour que la rotation de l'arbre de commande 12 de sa position de repos jusqu'à sa position d'actionnement s'effectue d'abord sans rotation du premier verrou 7 jusqu'au rattrapage dudit deuxième jeu angulaire, après quoi l'arbre de commande 12 entraîne le premier verrou jusqu'à sa position déverrouillée.

Sur le support 22 est également fixée une patte 26 sur laquelle un cliquet 16 est monté rotatif autour d'un axe 16a, le cliquet 16 étant déplaçable entre une position d'engagement où il bute contre une partie de la plaque constituant le levier 13 en bloquant ainsi le premier verrou 7 dans sa position déverrouillée, et une position effacée où il n'interfère pas avec le premier verrou.

Le cliquet 16 est sollicité vers sa position d'engagement par un ressort 17 de torsion monté entre ledit cliquet et la patte 26.

Le cliquet 16 coopère en outre avec un doigt de butée 18 solidaire du patin de mémorisation 8, ce doigt de butée étant prévu pour déplacer et maintenir le cliquet 16 dans sa position effacée lorsque le profilé mobile 6 est dans sa position mémorisée.

Par ailleurs, l'axe 9a du deuxième verrou 9 est disposé dans le prolongement de l'arbre de commande 12, et cet axe est solidaire d'une douille réceptrice 11 qui coopère avec l'extrémité d'accouplement 10 de l'arbre de commande 12 pour à la fois commander la rotation du deuxième verrou 9 et solidariser le patin de mémorisation avec le profilé mobile 6.

La douille réceptrice 11 comporte un évidement central cylindrique 11a prévu pour recevoir l'extrémité d'accouplement 10 de l'arbre 12. Cet évidement central 11a communique avec deux fentes 11b diamétralement opposées qui s'étendent axialement et radialement en traversant la paroi de la douille 11, lesdites fentes 11b communiquant elles-mêmes, à leur extrémité proche de l'axe 9a, respectivement avec deux fentes 11c qui s'étendent radialement et circonférentiellement en traversant également la paroi de la douille 11. Les fentes 11c présentent chacune une étendue angulaire voisine du deuxième jeu angulaire susmentionné.

Les fentes 11b et 11c sont prévues pour recevoir une goupille 10a solidaire de l'arbre de commande 12, qui s'étend perpendiculairement à l'arbre 12 en formant deux ergots radialement opposés, ces ergots étant disposés en correspondance avec les fentes 11b lorsque l'arbre de commande 12 est dans sa position de repos.

Le dispositif des figures 2 à 5 fonctionne comme suit.

Tant que le profilé mobile 6 est dans sa position mémorisée, que l'arbre de commande 12 est dans sa position de repos et que le premier verrou 7 est dans sa position verrouillée, comme représenté sur les figures 2 et 3, ce qui constitue la configuration normale de la glissière pendant l'utilisation du siège, le profilé mobile et le patin de mémorisation 8 sont immobilisés par rapport au profilé fixe 5 par les premier et deuxième verrous 7 et 9, le cliquet 16 est maintenu dans sa position effacée par le doigt de butée 18, et la goupille 10a est engagée au fond des deux fentes 11b de la douille réceptrice 11.

Lorsque l'utilisateur veut régler la position longitudinale de l'assise 2 du siège, il agit sur le levier 12a de l'arbre de commande 12, de façon à faire tourner l'arbre de commande 12 jusqu'à sa position d'actionnement, comme représenté sur la figure 4. Au cours de ce mouvement, l'arbre de commande 12 pivote d'abord sans entraîner les verrous 7 et 9, tandis que la goupille 25 se déplace dans la lumière 7d en rattrapant le deuxième jeu susmentionné et que la goupille 10a se déplace dans les fentes 11b de la douille réceptrice 11 en réalisant ainsi un couplage à baïonnette entre la douille réceptrice 11 et l'extrémité d'accouplement 10 du levier de commande, ce qui solidarise le patin de mémorisation 8 avec le profilé mobile 6.

Après cette première phase du mouvement de rotation de l'arbre de commande 12, ledit arbre de commande entraîne les deux verrous 7 et 9 en rotation jusqu'à leur position déverrouillée, après quoi il est possible de régler la position longitudinale de l'assise du siège en faisant coulisser le profilé mobile 6 et le patin de mémorisation 8 simultanément le long du profilé fixe 5. Au cours de ce mouvement, le cliquet 16 est maintenu dans sa position effacée par le doigt de butée 18.

Lorsque le réglage de la position longitudinale du siège est terminé, l'utilisateur relâche le levier 12a, de sorte que l'arbre de commande est ramené dans sa position de repos par le ressort 21, et les premier et deuxième verrous 7 et 9 sont ramenés dans leur position de repos respectivement par les ressorts 14 et 15.

A partir de la position réglée par l'utilisateur, lorsqu'il est nécessaire d'avancer au maximum l'assise du siège pour dégager l'accès aux places arrière du véhicule, l'utilisateur agit sur le levier 13, par l'intermédiaire d'un câble disposé généralement le long du dossier et relié à un levier de commande qui permet simultanément de rabattre le dossier du siège vers l'avant, et il exerce simultanément une poussée vers l'avant du siège.

Au cours de ce mouvement, le levier 13 subit une force A qui fait pivoter le premier verrou 7 jusqu'à sa position déverrouillée, sans que l'arbre de commande 12 soit influencé par ce mouvement, du fait du premier jeu angulaire prévu entre l'arbre de commande 12 et le premier verrou 7.

Simultanément, une force B est exercée sur le profilé mobile 6 dans la direction longitudinale L et vers l'avant, de sorte que le profilé mobile 6 coulisse vers l'avant avec l'assise du siège. La goupille 10a de l'extrémité d'accouplement du levier de commande 12 n'interfère pas avec ce mouvement, puisque l'arbre de commande 12 est toujours dans sa position de repos, de sorte que ladite goupille 10a est disposée en correspondance avec les fentes axiales 11b de la douille réceptrice 11 solidaire du deuxième verrou 9.

Dès qu'un petit mouvement vers l'avant du profilé mobile 6 a eu lieu, le cliquet 16 n'est plus maintenu par le doigt de butée 18, de sorte que ledit cliquet est déplacé dans sa position d'engagement par le ressort 17. Par conséquent, même si l'action de l'utilisateur sur le levier 13 est relâchée très rapidement, le premier verrou 7 est maintenu dans sa position déverrouillée par le cliquet 16.

L'utilisateur peut donc librement avancer au maximum l'assise 2 du siège, tandis que le patin de mémorisation 8 reste dans sa position initiale, puisque le deuxième verrou 9 est toujours dans sa position verrouillée.

Lorsque l'utilisateur veut retrouver la position préalablement réglée du siège, il lui suffit de reculer l'assise 2 du siège au maximum, jusqu'à ce que le profilé mobile 6 vienne buter contre le patin de mémorisation 8, c'est-à-dire jusqu'à ce que le profilé mobile 6 revienne dans sa position mémorisée.

A ce moment, l'extrémité d'accouplement 10 de l'arbre de commande 12 pénètre à nouveau dans l'évidement 11a de la douille réceptrice 11, tandis que la goupille 10a de cette extrémité d'accouplement pénètre dans les fentes 11b de la douille réceptrice.

Simultanément, le doigt de butée 18 solidaire du patin de mémorisation 8 déplace le cliquet 16 dans sa position effacée, de sorte que le premier verrou 7 est ramené dans sa position verrouillée par le ressort 14.

Le dispositif se retrouve donc à nouveau dans la configuration représentée sur les figures 2 et 3.

Dans la deuxième forme de réalisation de l'invention, représentée sur les figures 6 et 7, le premier verrou 100 ne coopère pas avec la denture 5a du profilé fixe, mais avec le deuxième verrou 101 qui lui-même coopère avec la denture 5a du profilé fixe.

Le premier verrou 100 est monté rotatif sur un côté du profilé mobile 6, autour d'un axe 100a perpendiculaire à la direction L et parallèle à la plaquette 101a du deuxième verrou lorsque le deuxième verrou est dans sa position verrouillée.

Le premier verrou est rappelé vers une position dite de repos où il est disposé longitudinalement sensiblement parallèlement à la direction L, au moyen d'un ressort de flexion 104 dont une extrémité est fixée sur le côté du profilé mobile 6, et dont l'autre extrémité est fixée à un ergot 102 du premier verrou.

A partir de cette position de repos, le premier verrou peut être déplacé en rotation dans une première direction 106, et dans une deuxième direction 107 opposée à la première.

Le premier verrou 100 comporte un bras 100b qui s'étend sensiblement parallèlement à la direction L vers le patin de mémorisation 8, et qui, lorsque le profilé mobile 6 est dans sa position mémorisée, pénètre dans un espace 108 laissé libre au-dessus de la plaquette 101a du deuxième verrou et au-dessous du support 8b sur lequel est monté le deuxième verrou.

Le bras 100b présente une extrémité distale formant une partie saillante 100c qui s'étend vers le bas, ladite partie saillante présentant de son côté le plus proche de l'axe 100a un bord d'arrêt 100d perpendiculaire à la direction longitudinale dudit bras 100b, et de son côté éloigné de l'axe 100a, un bord biais 100f.

Le premier verrou 100 comporte également des dents 100g, qui s'étendent vers le bas à partir du bras 100b, sans aller au-delà de la partie saillante 100c, lesdites dents pouvant s'engager dans des trous correspondant 101g de la plaquette 101a du deuxième verrou.

La partie saillante 100c est toutefois plus large que les orifices 101g, de sorte que ladite partie saillante ne peut pas pénétrer dans lesdits orifices en passant au-dessus de la plaquette 101a du deuxième verrou.

Eventuellement, les dents 100g et les orifices 101g pourraient être omis, sans sortir du cadre de la présente invention, l'accrochage du premier verrou 100 sur le deuxième verrou 101 se faissant alors uniquement par la partie saillante 100c.

Le dispositif de la deuxième forme de réalisation fonctionne comme suit.

Dans l'état normal d'utilisation du siège supporté par la glissière, le profilé mobile 6 est dans sa position de mémorisation, le deuxième verrou 101 est dans sa position verrouillée, et le premier verrou 100 est dans sa position de repos, le bord d'arrêt 100d de sa partie saillante 100c étant engagée contre un bord correspondant 101f de la plaquette 101a du deuxième verrou, et les dents 100g du premier verrou étant engagées dans les trous correspondant 101g de la plaquette 101a du deuxième verrou.

Lorsque l'utilisateur du siège veut régler le position longitudinale de l'assise de ce siège, il lui suffit de faire pivoter le premier verrou 100 dans la première direction 106. Pour cela, l'ergot 102 susmentionné, qui est disposé à l'opposé de la tige 100b par rapport à l'axe 100a, peut éventuellement être fixé à un câble lui-même commandé par un levier accessible à l'utilisateur (non représenté), l'action de l'utilisateur se traduisant par l'application sur l'ergot 102 d'une force C dirigée vers le haut.

Le pivotement du premier verrou 100 dans la première direction 106 entraîne un pivotement du deuxième verrou 101 jusqu'à sa position déverrouillée, par appui du bras 100b sur la plaquette 101a du deuxième verrou.

Ainsi, le profilé mobile 6 peut être déplacé librement le long du profilé fixe 5, et le patin de mémorisation 8 reste accouplé au profilé mobile 6 du fait de l'engagement du bord d'arrêt 100d du premier verrou contre le bord correspondant 101f du deuxième verrou, de fait de la butée d'une extrémité du profilé mobile 6 contre une extrémité du patin de mémorisation 8, et également, le cas échéant, du fait de l'engagement des dents 100g du premier verrou dans les trous 101g du deuxième verrou.

Lorsque la position longitudinale de l'assise du siège a été réglée, s'il est nécessaire d'avancer au maximum l'assise du siège pour dégager l'accès aux places arrière du véhicule, l'utilisateur fait pivoter le premier verrou 100 dans la deuxième direction, ce qui dégage le bord d'arrêt 100d du bord correspondant 101f et les dents 100g des orifices 101g.

Simultanément, l'utilisateur repousse le siège vers l'avant, de sorte qu'après une très léger déplacement vers l'avant de l'assise du siège, ce qui correspond à un mouvement identique du profilé mobile 6 supportant l'assise, le bras 100b du premier verrou ne se trouve plus à l'intérieur de l'espace 108 au-dessus de la plaquette 101a du deuxième verrou, de sorte que l'action de l'utilisateur sur le premier verrou peut être relâchée.

Le mouvement de pivotement du premier verrou 100 peut être obtenu par exemple par application d'une force D dirigée vers le haut sur un ergot 103 du premier verrou qui est disposé entre l'axe 100a et la tige 100b, l'application de cette force pouvant être obtenue par exemple au moyen d'un câble qui est disposé généralement le long du dossier et qui est relié à un levier de commande (non représenté).

Ainsi, l'utilisateur peut avancer l'assise 2 du siège, et donc le profilé mobile 6, au maximum, tandis que le patin de mémorisation 8 reste en place, puisque le deuxième verrou 101 est toujours dans sa position verrouillée.

Lorsque l'utilisateur veut remettre l'assise du siège dans sa position mémorisée, il lui suffit de déplacer cette assise vers l'arrière dans la direction L, de sorte que le profilé mobile 6 revient vers le patin de mémorisation 8 jusqu'à sa position mémorisée, où il bute contre ledit patin.

Au cours de ce mouvement, le bord biais 100f du bras 100b du premier verrou coopère avec la plaquette 101a du deuxième verrou pour faire pivoter le premier verrou dans la deuxième direction par effet de came, de façon que le bras 100b du premier verrou passe au-dessus de la plaquette 101a.

Ce pivotement du premier verrou 100 n'entraîne pas de pivotement du deuxième verrou 101 vers sa position déverrouillée, du fait que le ressort 105 qui rappelle le deuxième verrou dans sa position verrouillée a une force suffisante.

Du fait que la partie saillante 100c est plus large que les orifices 101g, le verrouillage du premier verrou 100 sur la plaquette 101a du deuxième verrou n'a lieu que lorsque la partie saillante 100c a dépassé la plaquette 101a.

Ainsi, la glissière se retrouve dans sa position normale d'utilisation.

## Revendications

1. Glissière (4) à mémoire pour siège de véhicule, comportant:
- un premier profilé dit fixe (5), destiné à être solidarisé avec le véhicule,
- un deuxième profilé dit mobile (6), destiné à supporter une assise (2) de siège, ce profilé mobile étant disposé parallèlement au profilé fixe et monté coulissant le long dudit profilé fixe,
- des premiers moyens de verrouillage (7; 100) pour immobiliser le profilé mobile (6) par rapport au profilé fixe (5), ces premiers moyens de verrouillage pouvant être placés soit dans un état verrouillé où le profilé mobile est immobilisé par rapport au profilé fixe, soit dans un état déverrouillé où le profilé mobile peut coulisser le long du profilé fixe,
- un patin de mémorisation (8) déplaçable en translation le long du profilé fixe (5) et limitant le mouvement du profilé mobile (6) dans un sens le long du profilé fixe, en définissant ainsi une position mémorisée du profilé mobile, le patin de mémorisation (8) comportant un tronçon de profilé de même section que le profilé mobile (6), lequel tronçon est monté coulissant le long du profilé fixe (5) de la même façon que ledit profilé mobile,
- des deuxièmes moyens de verrouillage (9; 101) pour immobiliser le patin de mémorisation (8) par rapport au profilé fixe (5), ces deuxièmes moyens de verrouillage pouvant être placés soit dans un état verrouillé où le patin de mémorisation est immobilisé par rapport au profilé fixe, soit dans un état déverrouillé où le patin de mémorisation peut coulisser le long du profilé fixe,
- des moyens d'accouplement (10, 11; 100) pour accoupler le profilé mobile (6) au patin de mémorisation (8), ces moyens d'accouplement étant dans un état accouplé au moins lorsque les premiers (7; 100) et deuxièmes (9; 101) moyens de verrouillage sont tous les deux dans leur état déverrouillé, le profilé mobile et le patin de mémorisation étant alors solidaires l'un de l'autre, et lesdits moyens d'accouplement étant dans un état désaccouplé au moins lorsque les premiers moyens de verrouillage sont dans leur état déverrouillé tandis que les deuxièmes moyens de verrouillage sont dans leur état verrouillé, le profilé mobile et le patin de mémorisation n'étant alors plus solidaires l'un de l'autre,
- des premiers moyens de commande (12; 102) pour placer simultanément les premiers (7; 100) et deuxièmes (9; 101) moyens de verrouillage dans leur état déverrouillé,
- des deuxièmes moyens de commande (13; 103) pour placer seulement les premiers moyens de verrouillage (7; 100) dans leur état déverrouillé, les deuxièmes moyens de verrouillage (9; 101) restant alors dans leur état verrouillé,
glissière **caractérisée en ce que** le patin de mémorisation (8) comporte en outre un organe de fixation (8a) pour une ceinture de sécurité.

2. Glissière selon la revendication 1, dans laquelle :
- le profilé fixe (5) comporte une denture (5a),
- les premiers moyens de verrouillage comportent un premier verrou (7) qui est monté sur le profilé mobile (6) et qui coopère avec la denture (5a) pour immobiliser le profilé mobile,
- et les deuxièmes moyens de verrouillage comportent un deuxième verrou (9) qui est monté sur le patin de mémorisation (8) et qui coopère avec ladite denture (5a) pour immobiliser le patin de mémorisation.

3. Glissière selon l'une quelconque des revendications précédentes, dans laquelle :
- les premiers moyens de verrouillage comportent un premier verrou (7) qui est monté sur le profilé mobile (6) et qui coopère avec le profilé fixe (5) pour immobiliser ledit profilé mobile, ce premier verrou étant déplaçable entre une position verrouillée et une position déverrouillée correspondant respectivement aux états verrouillés et déverrouillés des premiers moyens de verrouillage, et ledit premier verrou étant sollicité par un premier ressort (14) vers sa position verrouillée,
- les deuxièmes moyens de verrouillage comportent un deuxième verrou (9) qui est monté sur le patin de mémorisation (8) et qui coopère avec le profilé fixe (5) pour immobiliser ledit patin de mémorisation, ce deuxième verrou (9) étant déplaçable entre des positions verrouillée et déverrouillée correspondant respectivement aux états verrouillé et déverrouillé des deuxièmes moyens de verrouillage, et ledit deuxième verrou (9) étant sollicité par un deuxième ressort (15) vers sa position verrouillée,
- un cliquet (16) est monté sur le profilé mobile (6), ce cliquet étant déplaçable entre d'une part une position d'engagement où il bloque le premier verrou (7) dans sa position déverrouillée, et d'autre part une position effacée où il n'interfère pas avec le premier verrou, ledit cliquet étant sollicité vers sa position d'engagement par un troisième ressort (17),
- et un organe de butée (18) est solidaire du patin de mémorisation (8), cet organe de butée étant prévu pour déplacer et maintenir le cliquet (16) dans sa position effacée lorsque le profilé mobile (6) est dans sa position mémorisée.

4. Glissière selon la revendication 3, dans laquelle:
- les premiers moyens de commande comportent un arbre de commande (12) qui s'étend longitudinalement parallèlement au profilé fixe (5) et au profilé mobile (6) et qui est monté rotatif entre une position de repos et une position d'actionnement, l'arbre de commande étant sollicité vers sa position de repos par un quatrième ressort (21),
- le premier verrou (7) est monté rotatif à mouvement perdu autour de l'arbre de commande (12), des premiers et deuxièmes jeux angulaires étant prévus respectivement dans deux sens angulaires opposés entre l'arbre de commande et le premier verrou lorsque l'arbre de commande est dans sa position de repos et le premier verrou est dans sa position verrouillée, le premier jeu angulaire permettant au premier verrou de se déplacer de sa position verrouillée jusqu'à sa position déverrouillée sous l'action des deuxièmes moyens de commande sans entraîner de rotation de l'arbre de commande (12), le deuxième jeu angulaire étant prévu pour que la rotation de l'arbre de commande (12) de sa position de repos jusqu'à sa position d'actionnement s'effectue d'abord sans rotation du premier verrou (7) jusqu'au rattrapage dudit deuxième jeu angulaire, après quoi l'arbre de commande (12) entraîne le premier verrou jusqu'à sa position déverrouillée,
- le deuxième verrou (9) est monté rotatif autour d'un axe disposé dans le prolongement de l'arbre de commande (12),
- l'arbre de commande (12) comporte une extrémité d'accouplement (10) venant en engagement avec une partie réceptrice (11) solidaire du deuxième verrou (9) lorsque le profilé mobile (6) est dans sa position mémorisée, l'arbre de commande (12) entraînant alors le deuxième verrou (9) en rotation de sa position verrouillée à sa position déverrouillée avec un troisième jeu angulaire lorsque ledit arbre de commande est déplacé de sa position de repos à sa position d'actionnement, un couplage à baïonnette étant prévu entre l'extrémité d'actionnement (10) de l'arbre de commande et la partie réceptrice (11) pour solidariser le profilé mobile (6) avec le patin de mémorisation (8) après rattrapage du troisième jeu, ladite extrémité d'accouplement et ladite partie réceptrice constituant ainsi les moyens d'accouplement susmentionnés.

5. Glissière selon l'une quelconque des revendications 3 et 4, dans laquelle les deuxièmes moyens de commande comportent un levier (13) qui est solidaire du deuxième verrou (7).

6. Glissière selon la revendication 1, dans laquelle :
- les premiers moyens de verrouillage comportent un premier verrou (100) qui est monté sur le profilé mobile (6) et qui est sollicité vers une position de repos par un premier ressort (104),
- les deuxièmes moyens de verrouillage sont constitués par un deuxième verrou (101) qui est monté sur le patin de mémorisation (8) et qui est déplaçable entre une position verrouillée où il coopère avec le profilé fixe (5) pour immobiliser le patin de mémorisation (8) et une position déverrouillée où il permet le coulissement du patin de mémorisation (8), ce deuxième verrou (101) étant sollicité vers sa position verrouillée par un deuxième ressort (105),
- le premier verrou (100) est en prise avec le deuxième verrou (101) lorsque ledit premier verrou est dans sa position de repos et ledit deuxième verrou est dans sa position verrouillée tandis que le profilé mobile (6) est dans sa position mémorisée, pour solidariser le profilé mobile (6) avec le patin de mémorisation (8) lui-même immobilisé par rapport au profilé fixe (5), les premiers et deuxièmes moyens de verrouillage étant ainsi dans leur état verrouillé,
- le premier verrou (100) est déplaçable dans une première direction sous l'action des premiers moyens de commande (102), le premier verrou (100) restant alors en prise avec le deuxième verrou (101) et en agissant sur ledit deuxième verrou pour le déplacer dans sa position déverrouillée, les premier et deuxième moyens de verrouillage étant alors dans leur état déverrouillé et le premier verrou (100) constituant les moyens d'accouplement entre le profilé mobile (6) et le patin de mémorisation (8),
- le premier verrou (100) est également déplaçable dans une deuxième direction opposée à la première direction, sous l'action des deuxièmes moyens de commande (103), en se dégageant du deuxième verrou, les premiers moyens de verrouillage étant ainsi dans leur état déverrouillé tandis que les deuxièmes moyens de verrouillage restent dans leur état verrouillé.

7. Glissière selon la revendication 6, dans laquelle les premiers et deuxièmes verrous (100, 101) comportent respectivement des parties (100f, 101a) qui coopèrent par action de came pour déplacer le premier verrou dans la deuxième direction susmentionnée lorsque le profilé mobile (6) est ramené vers sa position mémorisée après en avoir été éloigné, le premier verrou (100) étant ensuite ramené dans sa position de repos lorsque le profilé mobile (6) est revenu dans sa position mémorisée, ce qui verrouille le profilé mobile (6), le deuxième ressort (105) ayant une force suffisante pour maintenir le deuxième verrou (101) dans sa position verrouillée au cours de ce mouvement.

8. Siège de véhicule comportant une assise (2) montée coulissante longitudinalement au moyen d'au moins une glissière selon l'une quelconque des revendications précédentes, l'assise du siège étant fixée au profilé mobile (6) de la glissière, ce siège comportant une ceinture de sécurité (19) dont un point de fixation est constitué par l'organe de fixation (8a) appartenant au patin de mémorisation (8).

9. Siège de véhicule selon la revendication 8, dans lequel l'organe de fixation (8a) appartenant au patin de mémorisation (8) est le seul point de fixation de la ceinture qui est fixé au siège.

## Claims

1. A memory slide (4) for a vehicle seat, the slide comprising:
a "fixed" first rail (5) deigned to be secured to the vehicle;
a "moving" second rail (6) designed to support the seat proper (2) of the seat, said moving rail being disposed parallel to the fixed rail and being mounted to slide along said fixed rail;
first locking means (7; 100) for locking the moving rail (6) relative to the fixed rail (5), said first locking means being capable of being placed either in a locked state in which the moving rail is locked relative to the fixed rail, or else in an unlocked state in which the moving rail is free to slide along the fixed rail;
a memory shoe (8) displaceable in translation along the fixed rail (5) and limiting movement of the moving rail (6) in the longitudinal direction of the fixed rail, thereby defining a memorized position of the moving rail, the memory shoe (8) including a length of rail having the same section as the moving rail (6), which length is slidably mounted to slide along the fixed rail (5) in the same manner as said moving rail;
second locking means (9; 101) for locking the memory shoe (8) relative to the fixed rail (5), said second locking means being capable of being placed either in a locked state in which the memory shoe is locked relative to the fixed rail, or else in an unlocked state in which the memory shoe is free to slide along the fixed rail;
coupling means (10, 11; 100) for coupling the moving rail (6) to the memory shoe (8), said coupling means being in a coupled state at least when the first and second locking means (7, 9; 100, 108) are both in the unlocked state, the moving rail and the memory shoe then being secured to each other, and said coupling means being in an uncoupled state at least when the first locking means are in the unlocked state while the second locking means are in the locked state, the moving rail and the memory shoe then being no longer secured to each other;
first control means (12; 102) for placing the first and second locking means (7, 9; 100, 101) simultaneously in the unlocked state; and
second control means (13; 103) for placing the first locking means (7; 100) only in the unlocked state, the second locking means (9; 101) then remaining in the locked state;
the slide being characterized in that the memory shoe (8) further includes a fixing member (8a) for a safety belt.

2. A slide according to claim 1, in which:
the fixed rail (5) includes a set of teeth (5a);
the first locking means include a first lock (7) which is mounted on the moving rail (6) and which co-operates with the set of teeth (5a) to lock the moving rail; and
the second locking means include a second lock (9) which is mounted on the memory shoe (8) and which co-operates with set of teeth (5a) to lock the memory shoe.

3. A slide according to any preceding claim, in which:
the first locking means include a first lock (7) mounted on the moving rail (7) and co-operating with the fixed rail (5) to lock said moving rail, said first lock being displaceable between a locked position and an unlocked position which corresponds respectively to the locked state and the unlocked state of the first locking means, and said first lock is biased towards the locked position by a first spring (14);
the second locking means include a second lock (9) which is mounted on the memory shoe (8) and which co-operates with the fixed rail (5) to lock said memory shoe, said second lock (9) being displaceable between a locked position and an unlocked position corresponding respectively to a locked state and to an unlocked state of the second locking means, and said second lock (9) is biased by a second spring (15) towards the locked position;
a pawl (16) is mounted on the moving rail (6), said pawl being displaceable between an engaged position in which it holds the first lock in the unlocked position, and a retracted position in which it does not interfere with the first lock, said pawl being biased towards its engaged position by a third spring (17); and
an abutment member (18) secured to the memory shoe (8), said abutment member being designed to displace and hold the pawl (16) in its retracted position while the moving rail (6) is in its memorized position.

4. A slide according to claim 3, in which:
the first control means include a control shaft (12) which extends longitudinally parallel to the fixed rail (5) and to the moving rail (6), and which is mounted to rotate between a rest position and an actuation position, the control shaft being urged towards its rest position by a fourth spring (21);
the first lock (7) is mounted to rotate with lost motion about the control shaft (12), first and second angular clearances being provided in two respective opposite angular directions between the control shaft and the first lock when the control shaft is in its rest position and the first lock is in the locked position, the first angular clearance allowing the first lock to move from the locked position to the unlocked position under the action of second control means without entraining rotation of the control shaft (12), the second angular clearance being provided so that rotation of the control shaft (12) from its rest position to its actuation position takes place initially without rotating the first lock (7) until said second angular clearance has been taken up, after which the control shaft (12) entrains the first lock to the unlocked position;
the second lock (9) is mounted to rotate about an axis disposed in line with the control shaft (12); and
the control shaft (12) includes a coupling end (10) that comes into engagement with a receiver portion (11) secured to the second lock (9) when the moving rail (6) is in its memorized position, the control shaft (12) then entraining the second lock (9) in rotation from the locked position to the unlocked position with third angular clearance when said control shaft is displaced from its rest position to its actuation position, a bayonet coupling being provided between the actuation end (10) of the control shaft and the receiver portion (11) to secure the moving rail (6) to the memory shoe (8) after taking up the third clearance, said coupling end and said receiver end thus constituting the above-mentioned coupling means.

5. A slide according to claim 3 or 4, in which the second control means include a crank (13) secured to the second lock (7).

6. A slide according to claim 1, in which:
the first locking means include a first lock (100) which is mounted on the moving rail (6) and which is biased into a rest position by a first spring (104);
the second locking means are constituted by a second lock (101) which is mounted on the memory shoe (8) and which is displaceable between a locked position in which it co-operates with the fixed rail (5) to lock the memory shoe (8), and an unlocked position in which it enables the memory shoe (8) to slide, said second lock (100) being biased towards the locked position by a second spring (105);
the first lock (100) engages the second lock (101) when said first lock is in its rest position and said second lock is in the locked position so long as the moving rail (6) is in its memorized position, for the purpose of locking the moving rail (6) to the memory shoe (8) which is itself locked relative to the fixed rail (5), the first and second locking means thus being in the locked state;
the first lock (100) is displaceable in a first direction under the action of first control means (102), the first lock (100) then remaining engaged with the second lock (101) and acting on said second lock to displace it into the unlocked position, the first and second locking means then being in the unlocked state and the first lock (100) constituting the coupling means between the moving rail (6) and the memory shoe (8); and
the first lock (100) is also displaceable in a second direction opposite to the first direction under action from the second control means (103), thereby releasing the first lock from the second lock, the first locking means thus being in the unlocked state while the second locking means remain in the locked state.

7. A slide according to claim 6, in which the first and second locks (100, 101) include respective portions (100f, 101a) which co-operate by cam action to displace the first lock in the second above-mentioned direction when the moving rail (6) is returned towards its memorized position after having been moved away therefrom, the first lock (100) subsequently be returned to its rest position once the moving rail (6) has returned to its memorized position, thereby locking the moving rail (6), the second spring (105) having sufficient force to hold the second lock (101) in the locked position during this movement.

8. A vehicle seat including a seat proper (2) mounted to slide longitudinally by means of a slide according to any preceding claim, the seat proper being fixed to the moving rail (6) of the slide, said seat including a safety belt (19) having a plurality of fixing points, one of which is constituted by the fixing member (8a) belonging to the memory shoe (8).

9. A vehicle seat according to claim 8, in which the fixing member (8a) belonging to the memory shoe (8) is the only fixing point of the belt which is fixed to the seat.

## Patentansprüche

1. Fahrzeugsitzgleitschiene (4) mit Gedächtnisfunktion, mit:
- einem ersten, sogenannten festen Profil (5), das vorgesehen ist, um fest mit dem Fahrzeug verbunden zu werden,
- einem zweiten, sogenannten beweglichen Profil (6), das vorgesehen ist, um eine Sitzfläche (2) eines Sitzes zu tragen, und das parallel zum festen Profil angeordnet und entlang des festen Profils gleitbeweglich montiert ist,
- ersten Verriegelungsmitteln (7; 100) zum Feststellen des beweglichen Profils (6) in bezug auf das feste Profil (5), wobei diese ersten Verriegelungsmittel in einen Verriegelungszustand, in dem das bewegliche Profil in bezug auf das feste Profil festgestellt ist, oder in einen Entriegelungszustand gebracht werden können, in dem das bewegliche Profil am festen Profil entlanggleiten kann,
- einer Gedächtniskufe (8), die entlang des festen Profils (5) verschiebbar ist und die Bewegung des beweglichen Profils (6) in einer Richtung entlang des festen Profils begrenzt und so eine zu erinnernde Position des beweglichen Profils definiert, wobei die Gedächtniskufe (8) ein Profilstück mit gleichem Querschnitt wie das bewegliche Profil (6) umfaßt, das entlang des festen Profils (5) gleitbeweglich in derselben Weise wie das bewegliche Profil montiert ist,
- zweiten Verriegelungsmitteln (9; 101) zum Feststellen der Gedächtniskufe (8) in bezug auf das feste Profil (5), wobei die zweiten Verriegelungsmittel in einen Verriegelungszustand, in dem die Gedächtniskufe in bezug auf das feste Profil festgestellt ist oder in einen Entriegelungszustand gebracht werden können, in dem die Gedächtniskufe am festen Profil entlanggleiten kann,
- Kupplungsmitteln (10, 11; 100) zum Ankoppeln des beweglichen Profils (6) an die Gedächtniskufe (8), wobei diese Kopplungsmittel wenigstens dann in einem Kopplungszustand sind, wenn die ersten (7; 100) und zweiten (9; 101) Verriegelungsmittel beide in ihrem Entriegelungszustand sind, wobei das bewegliche Profil und die Gedächtniskufe dann fest miteinander verbunden sind, und die Kopplungsmittel in einem Entkoppelungszustand wenigstens dann sind, wenn die ersten Verriegelungsmittel in ihrem Entriegelungszustand, die zweiten Verriegelungsmittel aber in ihrem Verriegelungszustand sind, wobei dann das bewegliche Profil und die Gedächtniskufe nicht mehr miteinander fest verbunden sind,
- ersten Steuerungsmitteln (12; 102) zum gleichzeitigen Versetzen der ersten (7; 100) und zweiten (9; 101) Verriegelungsmittel in ihren Entriegelungszustand,
- zweiten Steuerungsmitteln (13; 103) zum Versetzen nur der ersten Verriegelungsmittel (7; 100) in ihren Entriegelungszustand, wohingegen die zweiten Verriegelungsmittel (9; 101) in ihrem Verriegelungszustand bleiben,
dadurch **gekennzeichnet,** daß
die Gedächtniskufe (8) zusätzlich ein Befestigungselement (8a) für einen Sicherheitsgurt aufweist.

2. Gleitschiene nach Anspruch 1, bei der:
- das feste Profil (5) eine Zahnung (5a) umfaßt,
- die ersten Verriegelungsmittel einen ersten Riegel (7) umfassen, der am beweglichen Profil (6) montiert ist und mit der Zahnung (5a) zuzammenwirkt, um das bewegliche Profil festzustellen,
- und die zweiten Verriegelungsmittel einen zweiten Riegel (9) aufweisen, der an der Gedächtniskufe (8) montiert ist und mit der Zahnung (5a) zusammenwirkt, um die Gedächtniskufe festzustellen.

3. Gleitschiene nach einem der vorhergehenden Ansprüche, bei der:
- die ersten Verriegelungsmittel einen ersten Riegel (7) aufweisen, der am beweglichen Profil (6) montiert ist und mit dem festen Profil (5) zusammenwirkt, um das bewegliche Profil festzustellen, wobei dieser Riegel zwischen einer Verriegelungsposition und einer Entriegelungsposition bewegbar ist, die jeweils dem Verriegelungs- bzw. Entriegelungszustand der ersten Verriegelungsmittel entsprechen, und der erste Riegel durch eine erste Feder (14) in Richtung seiner Verriegelungsposition beaufschlagt ist,
- die zweiten Verriegelungsmittel einen zweiten Riegel (9) aufweisen, der an der Gedächtniskufe (8) montiert ist und mit dem festen Profil (5) zusammenwirkt, um die Gedächtniskufe festzustellen, wobei dieser zweite Riegel (9) zwischen einer Verriegelungsposition und einer Entriegelungsposition bewegbar ist, die jeweils dem Verriegelungs- bzw. Entriegelungszustand der zweiten Verriegelungsmittel entsprechen, und der zweite Riegel (9) durch eine zweite Feder (15) in Richtung seiner Verriegelungsstellung beaufschlagt ist;
- eine Raste (16) am beweglichen Profil (6) montiert ist, wobei diese Raste einerseits zwischen einer Eingriffsposition, in der sie den ersten Riegel (7) in seiner Entriegelungsposition blockiert, und andererseits einer versenkten Position bewegbar ist, in der sie nicht mit dem ersten Riegel zusammenwirkt, wobei diese Raste durch eine dritte Feder (17) in Richtung ihrer Eingriffsposition beaufschlagt ist,
- und ein Anschlagelement (18) mit der Gedächtniskufe (8) fest verbunden ist, wobei dieses Anschlagelement vorgesehen ist, um die Raste (16) in ihre versenkte Position zu bewegen und dort zu haltern, wenn das bewegliche Profil (6) in seiner zu erinnernden Position ist.

4. Gleitschiene nach Anspruch 3, bei der:
- die ersten Steuerungsmittel eine Steuerwelle (12) umfassen, die sich longitudinal parallel zum festen Profil (5) und dem beweglichen Profil (6) erstreckt und zwischen einer Ruheposition und einer Betätigungsposition drehbar montiert ist, wobei die Steuerwelle durch eine vierte Feder (21) in Richtung ihrer Ruhestellung beaufschlagt ist,
- der erste Riegel (7) im Leerlauf um die Steuerwelle (12) drehbeweglich montiert ist, wobei ein erstes und ein zweites Drehspiel zwischen der Steuerwelle und dem ersten Riegel jeweils in zwei entgegengesetzte Drehrichtungen vorgesehen sind, wenn die Steuerwelle in ihrer Ruheposition und der erste Riegel in seiner Verriegelungsposition ist, wobei das erste Drehspiel es dem ersten Riegel ermöglicht, sich aus einer Verriegelungsposition unter Einwirkung der zweiten Steuermittel in seine Entriegelungsposition zu bewegen, ohne eine Drehung der Steuerwelle (12) zu bewirken, und das zweite Drehspiel vorgesehen ist, damit die Drehung der Steuerwelle (12) aus ihrer Ruheposition in ihre Betätigungsposition zunächst ohne Drehung des ersten Riegels (7) abläuft, bis das zweite Drehspiel erschöpft ist, woraufhin dann die Steuerwelle (12) den ersten Riegel bis in seine Entriegelungsposition mitnimmt,
- der zweite Riegel (9) drehbeweglich um eine in Verlängerung der Steuerwelle (12) angeordnete Achse montiert ist,
- die Steuerwelle (12) ein Kopplungsende (10) aufweist, das mit einem mit dem Seitenriegel (9) fest verbundenen Aufnahmeabschnitt (11) in Eingriff kommt, wenn das bewegliche Profil (6) in seiner zu erinnernden Position ist, wobei dann die Steuerwelle (12) den zweiten Riegel (9) aus seiner Verriegelungsposition in seine Entriegelungsposition mit einem dritten Drehspiel drehantreibt, wenn die Steuerwelle aus ihrer Ruheposition in ihre Betätigungsposition bewegt wird, wobei eine Bajonettkupplung zwischen dem Betätigungsende (10) der Steuerwelle und dem Aufnahmeabschnitt (11) vorgesehen ist, um das bewegliche Profil (6) mit der Gedächtniskufe (8) nach Erschöpfung des dritten Spiels fest zu verbinden, so daß das Kopplungsende und der Aufnahmeabschnitt die oben erwähnten Kopplungsmittel bilden.

5. Gleitschiene nach einem der Ansprüche 3 und 4, bei dem die zweiten Steuermittel einen mit dem zweiten Riegel (7) fest verbundenen Hebel (13) umfassen.

6. Gleitschiene nach Anspruch 1, bei der:
- die ersten Verriegelungsmittel einen ersten Riegel (100) umfassen, der am beweglichen Profil (6) montiert und durch eine erste Feder (104) in Richtung einer Ruheposition beaufschlagt ist,
- die zweiten Verriegelungsmittel durch einen zweiten Riegel (101) gebildet sind, der an der Gedächtniskufe (8) montiert ist und zwischen einer Verriegelungsposition, in der er mit dem festen Profil (5) zusammenwirkt, um die Gedächtniskufe (8) festzustellen, und einer Entriegelungsposition bewegbar ist, in der er die Gleitbewegung der Gedächtniskufe (8) zuläßt, wobei dieser zweite Riegel (101) durch eine zweite Feder (105) in Richtung seiner Entriegelungsposition beaufschlagt ist,
- der erste Riegel (100) in Eingriff mit dem zweiten Riegel (101) steht, wenn der erste Riegel in seiner Ruheposition ist und der zweite Riegel in seiner Verriegelungsposition ist, während das bewegliche Profil (6) in seiner zu erinnernden Position ist, um das bewegliche Profil (6) mit der Gedächtniskufe (8) fest zu verbinden, die ihrerseits in bezug auf das feste Profil (5) festgestellt ist, so daß sich die ersten und zweiten Verriegelungsmittel in ihrem Verriegelungszustand befinden,
- der erste Riegel (100) unter Einwirkung der ersten Steuermittel (102) in eine erste Richtung bewegbar ist, wobei der erste Riegel (100) in Eingriff mit dem zweiten Riegel (101) bleibt und auf diesen zweiten Riegel einwirkt, um ihn in seine Entriegelungsposition zu bewegen, so daß sich die ersten und zweiten Verriegelungsmittel in ihrem Entriegelungszustand befinden und der erste Riegel (100) die Kopplungsmittel zwischen dem beweglichen Profil (6) und der Gedächtniskufe (8) bildet,
- der erste Riegel (100) ferner in eine der ersten Richtung entgegengesetzte zweite Richtung unter Einwirkung der zweiten Steuermittel (103) bewegbar ist, wobei er sich vom zweiten Riegel löst, so daß sich die ersten Verriegelungsmittel in ihrem Entriegelungszustand, die zweiten Verriegelungsmittel aber in ihrem Verriegelungszustand befinden.

7. Gleitschiene nach Anspruch 6, bei dem der erste und der zweite Riegel (100, 101) jeweils Bereiche (100f, 101a) aufweisen, die durch Nockenwirkung zusammenwirken, um den ersten Riegel in seine oben genannte zweite Position zu bringen, wenn das bewegliche Profil (6) in seine zu erinnernde Position zurückgebracht wird, nachdem es aus ihr entfernt worden ist, und der erste Riegel (100) anschließend in seine Ruheposition zurückgebracht wird, wenn das bewegliche Profil (6) in seine zu erinnernde Position zurückgekehrt ist, wodurch das bewegliche Profil (6) verriegelt wird, wobei die zweite Feder (105) eine ausreichende Kraft hat, um den zweiten Riegel (101) im Laufe dieser Bewegung in seiner Verriegelungsposition zu halten.

8. Fahrzeugsitz mit einer Sitzfläche (2), die mittels wenigstens einer Gleitschiene nach einem der vorhergehenden Ansprüche gleitbeweglich montiert ist, wobei die Sitzfläche des Sitzes am beweglichen Profil (6) der Gleitschiene befestigt ist und der Sitz einen Sicherheitsgurt (19) aufweist, von dem ein Befestigungspunkt durch das zur Gedächtniskufe (8) gehörende Befestigungselement (8a) gebildet ist.

9. Fahrzeugsitz nach Anspruch 8, bei dem das zur Gedächtniskufe (8) gehörende Befestigungselement (8a) der einzige am Sitz befestigte Befestigungspunkt des Gurtes ist.
